# FASCICULE DE BREVET EUROPEEN

(11) **EP 0 861 465 B1**
(45) Date de publication et mention de la délivrance du brevet: **19.03.2003**
(21) Numéro de dépôt: 97936760.4
(22) Date de dépôt: 08.08.1997
(51) Int. Cl.: G06F 9/445

(54) **PROCEDE DE CHARGEMENT D'UN SYSTEME D'EXPLOITATION**
URLADEVERFAHREN FÜR BETRIEBSSYSTEM
METHOD FOR LOADING AN OPERATING SYSTEM

(30) Priorité: 22.08.1996 FR 9610424
(43) Date de publication de la demande: 02.09.1998
(73) Titulaire: Schneider Automation, 06560 Valbonne (FR)
(72) Inventeur: GODICKE, Thomas, F-06560 Valbonne (FR); IANNI, Giovanni, F-06580 Pegomas (FR)
(74) Mandataire: Saint Martin, René
(86) Numéro de dépôt international: FR9701473
(87) Numéro de publication internationale: WO98008161

(56) Documents cités:
- GB-A- 2 295 908
- US-A- 5 467 286

## Description

La présente invention se rapporte à un procédé de chargement du système d'exploitation d'un appareil de traitement de l'information à microprocesseur de type ordinateur ou automate programmable .

Dans un ordinateur comme dans un automate programmable, le système d'exploitation constitue le logiciel de base. Il fournit un environnement, en liaison avec les constituants de l'ordinateur ou de l'automate, dans lequel les logiciels ou programmes d'application (souvent appelés "applications") peuvent fonctionner.

Il existe des appareils de traitement de l'information tels que le document US 5467286 dans lequel un programme d'amorce transfère la routine de transfert vers la RAM.

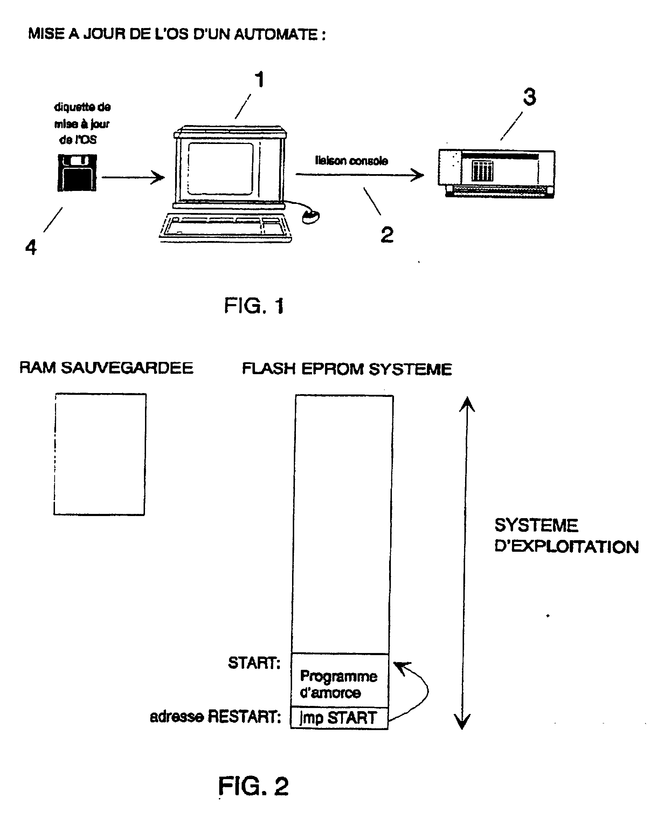

Dans un automate tel que celui de la figure 1, qui est équipé d'une mémoire RAM sauvegardée, le système d'exploitation réside, en partie ou en totalité, dans une mémoire Flash Eprom effaçable. Le système d'exploitation est pourvu d'un programme d'amorce pour le démarrage de l'appareil et pour le chargement de la mémoire Flash Eprom lors de la mise à jour du dit système.

Cette mise à jour commence par l'effacement de la Flash Eprom et tant que le chargement du programme d'amorce (figure 2) n'est pas terminé, toute coupure secteur rend impossible le redémarrage de l'appareil. La situation de blocage ainsi générée entraîne un "retour usine" de l'appareil ou alors une intervention sur le site pour remplacer les Flash Eproms ayant perdu le système d'exploitation.

La présente invention a pour but de réduire le risque de perte du système d'exploitation en cas d'une coupure secteur se produisant avant la fin du chargement du programme d'amorce (le programme d'amorce est par définition le plus petit logiciel capable de démarrer l'appareil et de recharger un système d'exploitation tout entier).

Le procédé de chargement de système d'exploitation selon l'invention s'applique à un appareil de traitement de l'information comportant une alimentation avec réserve d'énergie, un microprocesseur, une mémoire de type Flash Eprom effaçable, une mémoire RAM sauvegardée, un dispositif de détection des coupures secteur, une liaison console ou une mémoire de masse pour la mise à jour du système d'exploitation et il est caractérisé par le fait que lors d'une mise à jour, le système d'exploitation transfère le programme d'amorce dans la RAM sauvegardée, puis exécute ce programme d'amorce stocké dans la RAM, ce programme d'amorce stocké en RAM effaçant la mémoire Flash Eprom puis chargeant, à partir de la liaison console ou de la mémoire de masse, le nouveau système d'exploitation dans la mémoire Flash Eprom et que lorsqu'une coupure secteur est détectée, la réserve d'énergie de l'alimentation permet au programme d'amorce de programmer dans la mémoire Flash Eprom le branchement au point d'entrée en RAM sauvegardée de manière qu'à la reprise secteur, le microprocesseur active à l'adresse Restart le démarrage du programme d'amorce stocké dans la RAM.

On va maintenant décrire la présente invention en se référant à un mode de réalisation donné à titre d'exemple et représenté par les dessins annexés sur lesquels:
- la figure 1 représente la vision externe de la mise à jour du système d'exploitation d'un automate.
- la figure 2 illustre l'organisation interne de la Flash Eprom et de la RAM sauvegardée d'un procédé de chargement ne mettant pas en oeuvre l'invention;

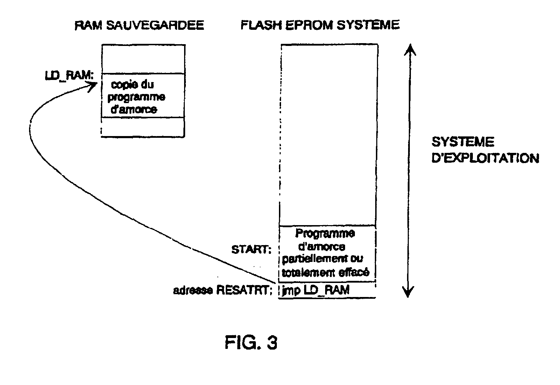

- la figure 3 illustre l'organisation interne de la Flash Eprom et de la RAM sauvegardée d'un procédé de chargement selon l'invention.

La configuration matérielle représentée à la figure 1 se compose d'un automate programmable 3 et d'une console de programmation 1 de type PC ou terminal. L'automate et sa console sont reliés par une liaison 2 leur permettant de communiquer. L'automate dispose d'une alimentation avec réserve d'énergie, d'un microprocesseur, d'une mémoire de type Flash Eprom effaçable, d'une mémoire RAM sauvegardée, d'un dispositif de détection des coupures secteur, d'une liaison console. Le système d'exploitation est pourvu d'un programme d'amorce pour le démarrage de l'automate et le chargement de la mémoire Flash Eprom. La mise à jour du système d'exploitation se fait par le biais de la disquette 4.

En variante, la configuration représentée à la figure 1 pourrait être constituée par un ordinateur seul, pourvu qu'il intègre les dispositifs ci-dessus indiqués pour l'automate. Dans ce cas, le but recherché serait la mise à jour du système d'exploitation de l'ordinateur lui même.

Lors d'une mise à jour, le système d'exploitation lance l'exécution du programme d'amorce qui commence par se loger dans la RAM sauvegardée.

Le programme d'amorce, puisque il est désormais dans la RAM, peut ensuite effacer la Flash Eprom et charger, par la liaison console, le nouveau système d'exploitation contenu dans la disquette 4.

A la fin du chargement, le contenu de la disquette 4 a été transféré dans la Flash Eprom et l'automate peut redémarrer sur le nouveau système d'exploitation.

Lorsque une coupure secteur est détectée avant la fin du chargement, la réserve d'énergie de l'alimentation, permet au programme d'amorce de graver, à l'adresse de Restart du microprocesseur dans la Flash Eprom, le branchement à son propre point d'entrée (LD_RAM) en RAM sauvegardée.

A la reprise secteur, le microprocesseur pourra donc redémarrer l'exécution du programme de chargement logé dans la Ram sauvegardée afin de recommencer le cycle d'effacement de la Flash Eprom et de chargement du système d'exploitation.

L'invention réduit le risque de perte du système d'exploitation au temps nécessaire à l'effacement de la Flash Eprom monobloc ou au secteur contenant le programme d'amorce dans le cas de Flash Eprom multi-blocs.

Il va de soi que la condition nécessaire au bon fonctionnement de l'invention est que le chargement du programme d'amorce dans la Flash Eprom soit toujours effectué avant le chargement de l'adresse de Restart du microprocesseur.

Il est bien entendu que l'on peut sans sortir du cadre de l'invention, imaginer des variantes et des perfectionnements de détail et de même envisager l'emploi de moyens équivalents.

## Revendications

1. Procédé de chargement du système d'exploitation d'un appareil de traitement de l'information comportant une alimentation avec réserve d'énergie, un microprocesseur, une mémoire de type Flash Eprom effaçable, une mémoire RAM sauvegardée, un dispositif de détection des coupures secteur, une liaison console (2) ou une mémoire de masse pour la mise à jour du système d'exploitation, **caractérisé par le fait que** lors d'une mise à jour, le système d'exploitation transfère le programme d'amorce dans la RAM sauvegardée, puis exécute ce programme d'amorce stocké dans la RAM, ce programme d'amorce stocké en RAM effaçant la mémoire Flash Eprom puis chargeant, à partir de la liaison console ( 2) ou de la mémoire de masse, le nouveau système d'exploitation dans la mémoire Flash Eprom et que lorsqu'une coupure secteur est détectée, la réserve d'énergie de l'alimentation permet au programme d'amorce de programmer, dans la mémoire Flash Eprom, le branchement au point d'entrée en RAM sauvegardée de manière qu'à la reprise secteur, le microprocesseur active à l'adresse Restart le démarrage du programme d'amorce stocké dans la RAM.

## Claims

1. Process for loading the operating system for an information processing device comprising a power supply with an energy reserve, a microprocessor, an erasable Flash EPROM type memory; a backed up RAM memory; a device for detecting mains power supply failures; a console link (2) or mass memory for updating the operating system, **characterized by** the fact that when making an update, the operating system transfers the boot program into the backed up RAM, then runs this boot program stored in RAM, this boot program stored in RAM erasing the Flash EPROM memory and then loading the new operating system into the Flash EPROM from the console link (2) or the mass memory and that when a mains power failure is detected, the power supply energy reserve enables the boot program to program the pointer to the entry point in backed up RAM into the Flash EPROM memory, so that when mains power is restored, the microprocessor starts the boot program stored in RAM at the Restart address.

## Patentansprüche

1. Verfahren zur Ladung eines Betriebssystems eines Datenverarbeitungsgeräts mit einer Versorgung mit einer Energiereserve, einem Mikroprozessor, einem löschbaren Flash Eprom Speicher ; einem gespeicherten RAM Speicher ; einer Vorrichtung zum Feststellen von Stromausfällen ; einer Konsolenverbindung (2) oder einem Massenspeicher zur Aktualisierung des Betriebssystems, **dadurch gekennzeichnet, dass** bei der Aktualisierung, das Betriebssystem den Urlader in den gespeicherten RAM überträgt und anschließend den in dem RAM aufbewahrten Urlader ausführt, wobei der in dem RAM aufbewahrte Urlader den Flash Eprom Speicher löscht und von der Konsolenverbindung (2) oder dem Massenspeicher aus das neue Betriebssystem in den Flash Eprom Speicher lädt, und bei Feststellung eines Stromausfalls, die Energiereserve für die Versorgung es dem Urlader erlaubt, in dem Flash Eprom Speicher den Anschluss an den Eingangspunkt in dem RAM zu programmieren, so dass bei Wiederkehr der Stromversorgung der Mikroprozessor das Starten des in dem RAM gespeicherten Urladers an der Adresse Restart aktivieren kann.
